(19) Europäisches Patentamt
European Patent Office
Office européen des brevets

(11) **EP 1 850 044 A2**

(12) # EUROPEAN PATENT APPLICATION

(43) Date of publication:
**31.10.2007 Bulletin 2007/44**

(51) Int Cl.:
**F16L 1/20** [2006.01]  **F16L 1/24** [2006.01]
**F16L 3/10** [2006.01]

(21) Application number: **07251546.3**

(22) Date of filing: **11.04.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **28.04.2006 GB 0608431**

(71) Applicant: **Balmoral Group Limited**
**Loirston**
**Aberdeen City AB12 3GY (GB)**

(72) Inventor: **Stokes, Kevan Frederick**
**Portlethen, Aberdeen AB12 4QG (GB)**

(74) Representative: **Henderson, Lucy Elizabeth**
**Murgitroyd & Company**
**Scotland House**
**165-169 Scotland Street**
**Glasgow G5 8PL (GB)**

(54) **Clamp for a riser**

(57) A clamp device (10) suitable for attachment to a riser (60) comprises a clamp body (12) having an inner face with a layer of resilient material (14) provided thereon and a tensioning band to secure the clamp around the riser (60).

Fig. 6b

EP 1 850 044 A2

Printed by Jouve, 75001 PARIS (FR)

## Description

This invention relates to a clamp device for securing buoyancy elements to underwater flowlines.

In order to extract hydrocarbons from subsea wells, flowlines, often referred to as risers, extend from a wellhead to a surface facility, such as an oil rig. Risers are flexible and bend in response to prevailing underwater conditions. To manufacture flexible risers it is necessary to have an inner tube/ tensile layers and an outer plastic sheath for protection from the sea. This sheathing has a low coefficient of friction with the inner tube of the riser and so is relatively delicate.

In order to isolate subsea terminations from the effects of vessel movement under weather and tide effects, buoyancy modules are used to create particular configurations of risers, for example configurations known as 'Lazy S', Lazy Wave', 'Lazy W', between a Floating Production Storage and Offtake (FPSO) vessel and the seabed or floating subsea structure.

Moreover, the weight of the risers and hydrocarbons therein could be supported by the surface facility but would require strong risers and connections to maintain the integrity of a long string of risers. It is thus more economic to attach buoyancy elements to the risers to provide additional support.

Clamps can be used to fit around the riser and provide a mounting for a buoyancy element. However the attachment of the clamp must be done carefully since the sheath on the riser is liable to tear away from the underlying tensile layers of the riser if attachments thereto are overtensioned. It is possible to make a rigid bodied clamp that is a perfect fit on a riser (the very earliest clamps were individually bored from aluminium castings to match particular locations on a riser) but it is expensive and not very practical as actual diameter of a flexible riser in practice can easily exceed +/- 3% of a given diameter.

In any case, the changes in internal and external pressure and temperature of the riser can result in a variance in the diameter of the riser and affect its connection to a clamp. Moreover the bending and tensile strains which occur in risers in use further hinder the correct dimensioning of rigid clamps. As a result manufacturing clamps with an exact fit for the flowlines was difficult and expensive and such clamps were in any case subject to failure due to the *in situ* variance in riser diameter.

A number of further clamps have been developed to mitigate these problems. One known clamp disclosed in GB2,391,255 comprises a series of clamp segments shaped to fit around a riser, and a band with bars at either end. The band is wrapped around the clamp body, which is in turn arranged around the riser. The bars are bolted together in order to tension the band around the clamp segments and attach the clamp under tension to the riser. The buoyancy element can then be attached to the clamp.

Although somewhat satisfactory, performance limitations are constantly being challenged with demands for clamps to cope with larger buoyancy loads and deployment in rougher sea states, and to accommodate larger riser strains and tighter riser bend radii and high rates of change of these radii.

However, increasing the load capacity is limited by the low coefficient of friction between the outer sheath of the riser and the tensile layers.

According to one aspect of the present invention there is provided a clamp device suitable for attachment to a riser, the clamp comprising:

a clamp body, a layer of resilient material provided on an inner face of the body and a tensioning band to secure the clamp around a riser.

Thus in use, the resilient material is preferably provided between the riser and the clamp frame.

Preferably the layer of resilient material is provided on an inner concave face of the body

Preferably the clamp body comprises a plurality of segments

Preferably the tensioning band has an axis bar at each end, and fastening means to draw the axis bars together.

Preferably one or more preferably each axis bar comprises a first part and a second part connected but moveable with respect to each other, the first part connected to the band, the second part connected to the fastening means.

Preferably the first and second parts part-rotate with respect to each other.

Preferably the first part is a sleeve which encloses the second part which is an insert.

Preferably the insert comprises bores through which the fastening means extend.

Preferably the resilient material is a rubber material.

Preferably the resilient material has a thickness of at least 20mm,

More preferably the resilient material has a thickness of at least 25mm.

Preferably the resilient material is of a thickness of 5-15% of that of the riser,

More preferably the resilient material is of a thickness of 8-12% of the thickness of the riser.

Preferably each segment has a weak point which is adapted to bend in use. Each segment may have more than one weak point. Since the weak points act as *pseudo* hinges, preferably the weak points and interfaces or gaps between segments are substantially equidistant from each other. Thus for a three segment clamp the weak points are typically proximate the middle of each segment. For a two part clamp, there may be two weak points in each segment spaced evenly between its edge

Preferably the clamp is made from a material which has a higher axial strength than radial or hoop strength.

Preferably the fastening means are two bolts provided on the bar adjacent to the band, that is they do not extend towards the outer limits of the bar where the band is not connected.

Preferably the clamp body has a convex outer face.

Typically the insert comprises bores through which the fastening means extend.

Typically the resilient material is a rubber material.

Preferably the band is supported between the bar and the body, thus preferably there is no gap therebetween. This allows the force from the band to be distributed more evenly.

Thus preferably the clamp body is in intimate contact with the band and bars over the full width of the band. This is possible because the low shear of the resilient rubber layer adjacent to the riser allows the clamp body to move radially when the band is being tensioned and thus remain in intimate contact with the band and axis bars.

Preferably a buoyancy element is secured to the riser via the clamp.

Thus the invention provides an apparatus comprising a clamp as described herein and a buoyancy module.

The invention also provides a riser apparatus comprising a clamp as described herein and a buoyancy module and a riser.

Embodiments of the present invention will now be described, by way of example only, with reference to the accompanying drawings, in which:

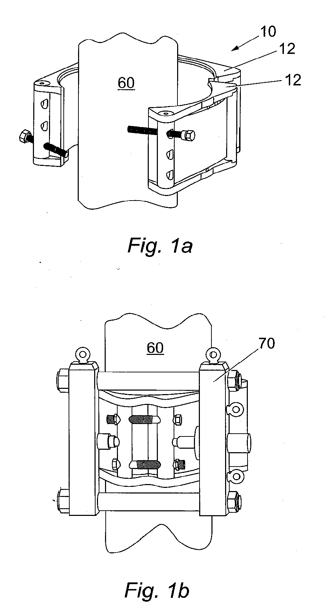

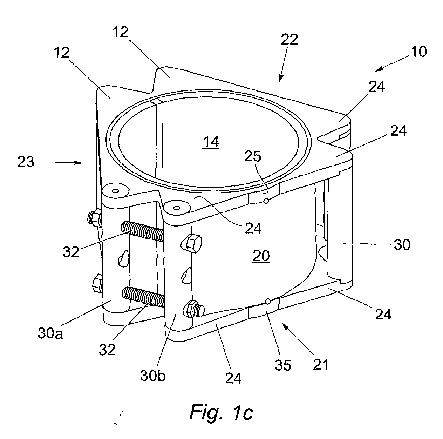

> Fig. 1 a is a perspective view of a riser and clamp in accordance with the present invention with attachment bolts disconnected;
> Fig. 1 b is a perspective view of the Fig. 1 a riser and clamp showing an installation tool for tensioning the strap without any load upon the bolts;
> Fig. 1 c is a perspective view of the Fig. 1 a clamp in a connected position;
> Fig. 2 is a diagram showing various forces acting on axis arms of the a known clamp;
> Fig. 3 is a cross sectional view of an axis arm of a clamp in accordance with the present invention;
> Fig. 4 is a perspective view of a plurality of buoyancy devices mounted on clamps in accordance with the present invention.
> Fig. 5 is a diagram showing the different bending moments experienced by axis bars of a known clamp and a clamp in accordance with the present invention;
> Fig. 6a is a diagram showing the change in dimension of known clamps caused by bending of risers; and,
> Fig. 6b is a diagram showing the how clamps in accordance with the present invention do not change in dimension when risers bend.

A clamp 10 in accordance with the present invention is best shown in Fig. 1c and comprises a body 12 having three segments 21, 22, 23. Each segment comprises a concave inner face which is provided with a layer of rubber 14, and an outer convex face which is covered by a band 20. Lugs 24 extend radially outwards from each corner of each segment 21-23 and bars 30 extend between opposite lugs 24. The lugs 24 also define a path for the band 20 to rest, thus providing even support for the clamping action.

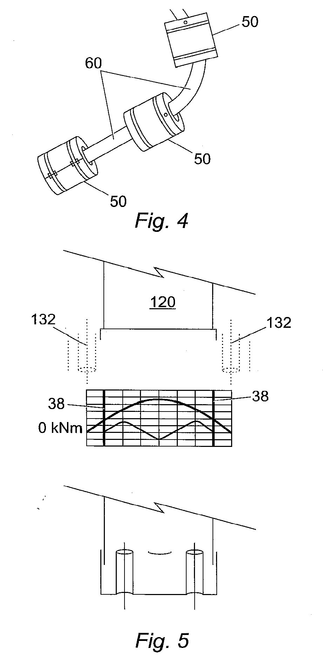

All three segments can then be wrapped around a subsea riser 60. The bars 30a, 30b are attached to the band 20 and are tightened together by bolts 32 thus tensioning the clamp around the riser 60, as described in more detail below. A buoyancy device 50 is then connected to the clamp by known means. The riser 60 is then fed through a moon-pool (not shown) or similar, with buoyancy devices being installed and launched sequentially. Fig. 4 shows three buoyancy devices 50 on a riser 60. The buoyancy devices 50 thus allow the riser string to flex in response to tide and wave conditions so that the connections between the surface facility (which may move in response to such conditions) and subsea wellhead or structure (which is substantially stationary) are not excessively stressed or broken. The clamp 10, and the buoyancy devices 50, may be installed on either a horizontal or a vertical riser.

As will be noted from Fig. 4, the risers are not rigid and are adapted to bend to cope with sea conditions. Thus the clamp 10 has to cope with such bending without losing its grip on the riser 60. Moreover the acceptable manufacturing tolerances on risers can cause their outer diameter to vary away from the declared size.

The rubber inner face 14 helps to cope with such difficulties. In this preferred embodiment the rubber inner face 14 is provided in direct contact with the riser 60. Thus the approach taken here is in marked contrast to that described in GB2391255 where a resilient layer is provided between a clamp body and a tensioning band. Moreover the rubber layer here is a relatively thick layer at around 30mm in thickness.

A further advantage of incorporating the resilient rubber layer next to the riser is that the radial distribution of the clamping pressure is improved, mitigating the capstan effect that is common to known clamp designs. In other words, the low shear modulus of the rubber allows the relative movement of the band and segments as if the band were in contact with a frictionless interface thus relieving tensioning variances within the band. Moreover this is achieved without reducing the friction necessary to prevent slippage.

In general, the minimum, hoop wise, band tension (T) required to resist slippage of a load (F) is a function of a coefficient of friction ($\mu$) and clamp efficiency factor ($\alpha$) and they are related thus:

$$T := F \cdot \mu \cdot \alpha$$

The lower the value of $\alpha$, the lower the band tension required. $\alpha$ is a function of the number of clamp segments that contact the riser and ranges in value from a minimum of 4 if there are only two clamp segments to a maximum of $2\pi$ (= 6.28) if there is an infinite number of clamp segments or a continuous flexible band.

The more segments that are provided, the closer the fit of the clamp to the riser, however this increases the time required for assembly. The use of the compliant rubber at this interface between the clamp 10 and riser 60 is effective in causing the clamp 10 made with three or some other limited number of body segments to behave almost as though it were a continuous flexible band. The $\alpha$ factor for a three segment clamp without such a layer is 5.2. In order to affect the same amount of slippage resistance as a three segment clamp with such a rubber layer, a 16% increase in the band tension would be required.

Suitable materials for the rubber are those which not only have low stress relaxation rates, resistance to seawater and high heat resistance but those that result in liquid like behaviour under load, that is virtually no volume change under load (a Poison's ratio near to 0.5). Most grades of natural rubber have a value in excess of 0.49995. They also have very high resilience - when the load on it is reduced the rubber recovers rapidly. If this did not occur, slip could be possible when the riser contracts. Preferably the rubber is natural rubber such as Engineering Vulcanzate™.

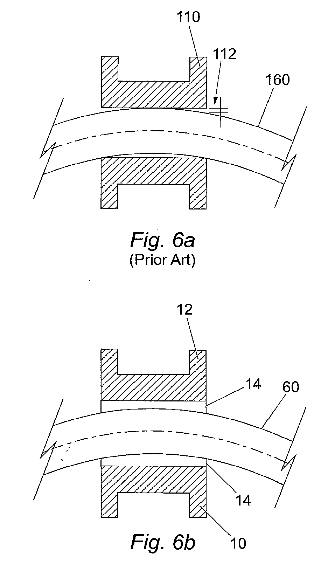

Fig. 6a shows a prior art clamp 110 and the consequential increase 112 in diameter following bending of a riser 160. The resultant large, cyclic increases in band tension will cause fatigue in the tensioning band. This does not occur with preferred embodiments of the present invention because the rubber layer 14 next to the riser 60 negates this effect, as shown in Fig. 6b. Thus embodiments of the present invention accommodate flexure of a riser from straight to minimum bend radius with no significant increase in the hoop load. As a consequence, fatigue of the tensioning band is not an issue.

The rubber layer also serves to accommodate large variations in diameter of the riser. Without such a rubber layer, even small dimensional variations due to manufacturing tolerances of the riser, it would not be possible to evenly tension a band around a stiff clamp body. Thus embodiments of the present invention benefit in that bending/flexure of the riser does not result in large load increases in the clamp or high local pressure increases on the riser.

A further feature of the clamp 10 over and above the rubber inner face 14 is that the three segments are adapted to function as six segments by the provision of a relatively weak mid point 35 in each segment. The middle sections of the segments have short lengths without radially extending lugs on the upper and lower faces. The absence of lugs at these points greatly reduces the circumferential stiffness of the clamp segments in these locations producing the weak points 35 and allows them to function as 'hinges' thereby allowing the clamp segments to conform more accurately to the riser. In effect, each segment of the clamp can achieve the conformance performance more typically associated with 2 separate segments, without the assembly and alignment difficulties associated with increased segment numbers. This allows each segment to bend in use which further increases its $\alpha$ factor and further reduces the amount of tensioning required.

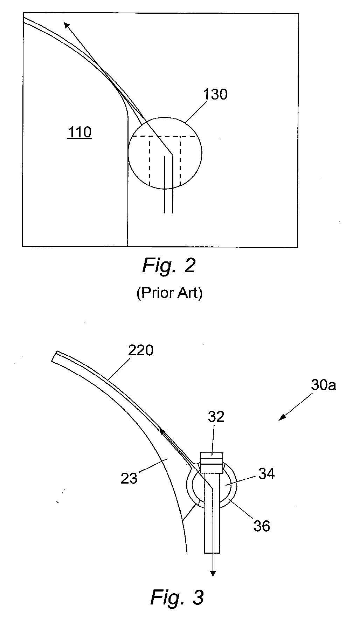

Fig. 3 shows an axis bar 30a in more detail. The bar 30a comprises an outer sleeve 36 connected to the band 20. The sleeve 36 encloses an insert 34 which is rotatably disposed therein. Apertures (not shown) are provided in the insert 34 to allow access for the bolts 32.

To assemble the clamp 10 around the riser 60, a hydraulic tensioner 70 (shown in Fig. 1 b) draws the opposite bars 30a, 30b together before connection of the bolts 32 in the bar 30a of the third segment 23 to the opposite bar 30b of the first segment 31. The part-rotation of the inserts 34 in the sleeves 36 allows the apertures in the opposite bars 30a, 30b to be accurately aligned with each other. The bolts are then threaded through the apertures on opposite bars 30a, 30b to wrap the clamp 10 around the riser 60.

Thus the band 20 is tensioned without any load on the bolts or rotating bars, the bolts 32 can then simply be run up finger-tight. The bolts 32 and strap 20 will have the correct tension when the hydraulic tensioner 70 is depressurised.

Known clamp designs suffer from problems due to the inaccurate alignment of the holes on opposite bars. When the band of know designs which simply have a bar with apertures connected to the band is tightened, the axis bars rotate about the centre line of the riser and the relative alignment of the bolt holes in each of the axis bars alters. Moreover, as shown in Fig. 2, very large bending moments are induced into the bolts and particular locations on the band. There is also very high bearing stress where the bars bear upon the clamp body.

Thus a particular advantage of embodiments of the present invention is the provision of such a bar with two elements, one connected to a band and another relatively moveable element for connecting the bolts to the opposite bar. This eliminates or mitigates the bending moments applied to the bolts.

Fig. 3 also shows that the band 20 is fully supported between the bar 30a and the segment 23 in contrast to the prior art where a gap is apparent between the body 110 and bar 130. Since there is no load transfer across this gap, the load transferred immediately to each side of the gap will be higher and more concentrated than it would be if there were solid material in the gap. In contrast the Fig. 3 embodiment of the present invention distributes the reaction against the clamp segment 23, and between the clamp 12 and the riser 60 more evenly. In known clamps, the point loading between titanium axis bars and the hard clamp body can damage the riser.

The provision of such support to the band 20 is possible since the clamp segments 21, 23 will move with the band 20 since the shear of the rubber layer facilitates movement of the segments. This would not be possible without the provision of a rubber layer and so the known devices are left with a portion of unsupported band and its associated problems, discussed above.

The segments 21-23 of the clamp 10 are manufactured from a fibre reinforced composites material which makes use of directional stiffness properties or moulded from syntactic foams. The segments 21-23 are very much stiffer in the axial direction than they are in the hoop wise direction. This allows for good load dispersal from the band 20 in the axial direction, for which stiffness is desirable, and compliance to the riser 60 geometry in the hoop wise direction thus enhancing the conformity of the clamp with the riser 60 whilst also providing support for a high loading of buoyancy elements.

Notably the bolts in the preferred embodiment are within the width defined by the band 20 or "inboard". The bending moments in the bars 30a, 30b and the stress distribution in the join between the band 20 and the bars 30a, 30b is greatly improved by such a position of the bolts. Fig. 5 compares this to the known provision of bolts outside the width of a band or "outboard". At the top of Fig. 5 a known design comprising a band 120 and outboard bolts 132 is shown. The resulting stress is shown by the curved line in the graph below. Further below, the inboard arrangement of preferred embodiments of the present invention is shown and this corresponds to the smaller line plotted on the graph. Not only is the stress applied to the band significantly less, but the stress applied at the end of the joint between the bar and the band 20 (shown as 38 in Fig. 5) is negligible for such embodiments.

The various features described herein of the preferred embodiment of the invention allows the clamp to be tensioned very accurately with a more even load distribution across the width of the band, minimises the stress concentration where the edge of the band is welded to the bars, minimises the stress concentration where the axis bars bear upon the clamp body, does not require that the band should yield as it is tensioned, virtually eliminates any bending moments in the bolts, allows the bolts to be loaded without rotation under high load which precludes galling and thread stripping, and allows for a fast yet accurate installation.

The design of the clamp segments with high axial stiffness and low hoop stiffness also enhances the even pressure distribution. The even pressure distribution is especially important since localised differences could cause the clamp to damage the internal reinforcement structure of the riser.

Thus embodiments of the present invention benefit in that the clamp is better able to accommodate variations in the riser diameter, both ovality and differences in the circumference measurement than is the case where a rigid clamp body is in direct contact with the riser or even where a rigid clamp body with a thin covering or coating. Thin (relative the diameter) coatings or coverings would be too stiff to provide any significant enhancement

Thus embodiments of the present invention benefit in that there are few clamp body segments but the clamp performs as though there were a lot more which increases the value of the alpha factor thereby allowing a greater load to be resisted with a particular band tension.

This clamp is relatively thin, the clamp body 12 being around 10mm - 25mm thick and the rubber layer around 20 - 30mm thick and so typically less than 50mm in total. Preferred embodiments are less than 45mm. This means that the clamp will be far less likely to insulate risers carrying hot fluids and thus cause degradation of the mechanical properties of the riser, clamp and buoyancy module. An advantage of embodiments of the invention is that since the bolts and bars are not rotated or moved under high load the bars may be made of a material other than titanium such as a carbon fibre composite which can result in a reduction in the submerged weight of the clamp. Moreover, another metal (e.g. super duplex) can be used for the bolts as they can be isolated from the titanium by the carbon fibre bars thereby avoiding direct contact between titanium and duplex and avoiding galvanic corrosion problems with titanium when it directly contacts stainless steel in seawater. In preferred embodiments, the duplex bolts will bear on and transfer load to carbon fibre inserts and these inserts will in turn bear on the inside of titanium sleeves, to achieve the necessary band tension.

A further benefit is that thermal shielding of the riser by a clamp causing localised overheating of the riser sheath, the buoyancy module and or the clamp is mitigated by preferred embodiments of the current invention which use a relatively small clamp made with a glass reinforced plastic body with relatively good thermal conductivity.

Improvements and modifications may be made without departing from the scope of the invention.

In a further embodiment the tensioning band described above may be replaced by a band having looped ends to provide a pocket for locating a connector. Each connector may have one or more aligned apertures to receive a fastening means such as a threaded bolt which passes through the apertures to span the connectors. The fastening means may be held in position either by corresponding threads on the connectors or a nut threaded onto the bolt. The band may be formed of a material such as Kevlar ®. In this embodiment the lugs and axis bars described above may not be required.

## Claims

1. A clamp device suitable for attachment to a riser, the clamp comprising:

   a clamp body, a layer of resilient material provided on an inner face of the body and a tensioning band to secure the clamp around a riser.

2. A clamp device according to claim 1, wherein the layer of resilient material is provided on an inner concave face of the body

3. A clamp device according to claim 1 or 2, wherein the clamp body comprises a plurality of segments

4. A clamp device according to any one of the preceding claims, wherein the tensioning band has an axis bar at each end, and fastening means to draw the axis bars together.

5. A clamp device according to claim 4, wherein one or more axis bar comprises a first part and a second part connected but moveable with respect to each other, the first part connected to the band, the second part connected to the fastening means.

6. A clamp device according to claim 5, wherein the first and second parts part-rotate with respect to each other.

7. A clamp device according to claim 6, wherein the first part is a sleeve which encloses the second part which is an insert.

8. A clamp device according to claim 7, wherein the insert comprises bores through which the fastening means extend.

9. A clamp device according to any one of the preceding claims, wherein the resilient material is a rubber material.

10. A clamp device according to claim 9, wherein the resilient material has a thickness of at least 20mm,

11. A clamp device according to claim 9, wherein the resilient material has a thickness of at least 25mm.

12. A clamp device according to any one of claims 9-11, wherein the resilient material is of a thickness of 5-15% of that of the riser,

13. A clamp device according to any one of claims 9-11, wherein the resilient material is of a thickness of 8-12% of the thickness of the riser.

14. A clamp device according to claim 3 wherein each segment has a weak point which is adapted to bend in use.

15. A clamp device according to any one of the preceding claims, wherein the clamp is made from a material which has a higher axial strength than radial or hoop strength.

16. A clamp device according to claim 4, wherein the fastening means are two bolts provided on the bar adjacent to the band.

17. A clamp device according to any one of the preceding claims, wherein the clamp body has a convex outer face.

18. A buoyancy element secured to a riser via a clamp device according to any one of the preceding claims.

19. An apparatus comprising a clamp device according to any one of the preceding claims and a buoyancy module.

20. A riser apparatus comprising a clamp device according to any one of the preceding claims and a buoyancy module and a riser.

*Fig. 1a*

*Fig. 1b*

*Fig. 1c*

**Fig. 2**

(Prior Art)

**Fig. 3**

50

60

50

50

*Fig. 4*

132

120

132

38

38

0 kNm

*Fig. 5*

110

112

160

Fig. 6a
(Prior Art)

12

14    60

14

Fig. 6b    10

**EP 1 850 044 A2**

**REFERENCES CITED IN THE DESCRIPTION**

**Patent documents cited in the description**

- GB 2391255 A